## Europäisches Patentamt

## European Patent Office

## Office européen des brevets

(11) Veröffentlichungsnummer : **0 105 946**
**B1**

(12) **EUROPÄISCHE PATENTSCHRIFT**

(45) Veröffentlichungstag der Patentschrift :
18.09.85

(51) Int. Cl.⁴ : **H 04 N 1/028, G 02 B 26/10,
G 02 B 6/04**

(21) Anmeldenummer : **82109373.9**

(22) Anmeldetag : **09.10.82**

(54) **Verfahren und elektrisch steuerbare Abtasteinrichtung zur moiréfreien Abtastung gerasterter Vorlagen.**

(43) Veröffentlichungstag der Anmeldung :
25.04.84 Patentblatt 84/17

(45) Bekanntmachung des Hinweises auf die Patenterteilung : 18.09.85 Patentblatt 85/38

(84) Benannte Vertragsstaaten :
AT BE CH DE FR GB IT LI NL SE

(56) Entgegenhaltungen :
US-A- 3 991 318
US-A- 4 311 357
THE BELL SYSTEM TECHNICAL JOURNAL, Band 60, Nr. 4, April 1981, Murray Hill, W. PFERD et al. "Optical fibers for scanning digitizers", Seiten 523-534

(73) Patentinhaber : **DR.-ING. RUDOLF HELL GmbH
Grenzstrasse 1-5
D-2300 Kiel 14 (DE)**

(72) Erfinder : **Hennig, Eberhard
Bundhorster Chaussee 3
D-2323 Ascheberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

### Technisches Gebiet

Die Erfindung bezieht sich auf das Gebiet der Reproduktionstechnik, wobei von der gemeinsamen Abtastung von Vorlagen ausgegangen wird, die ungerastert oder in unterschiedlicher Rasterweite und/oder Rasterwinkeln gerastert sind.

### Stand der Technik

Die Verwendung gerasterter Offset-Vorlagen für den Tiefdruck, die sogenannte « Offset-Tiefdruck-Konversion » (oder kurz OTC genannt) gewinnt zunehmend an Bedeutung. Hauptvorteil dieses Verfahrens ist, daß man gerasterte Offset-Positive schneller und billiger herstellen und korrigieren kann als die bisher üblichen Halbtonauszüge für den Tiefdruck. Ebenso wirtschaftlich kann man davon Probedrucke (Proofs) herstellen. Weil die Umsetzungsbedingungen vom Offset zum Tiefdruck bekannt sind, kann man auf diese Weise das Druckergebnis im Tiefdruck optimieren, bevor man — etwa durch elektronische Gravur — die teure Tiefdruckform erstellt.

Aus der deutschen Patentanmeldung DE-A1-3 217 752 ist ein Verfahren zur moiréfreien Abtastung bekannt, bei dem zur Abtastung eine in Form, Größe und Winkelstellung auf das Raster der Vorlage abgestimmte Blende benutzt wird.

Dieses Verfahren hat jedoch Grenzen, wenn z. B. wie in « Der Polygraph », Heft 18 — 1968, beschrieben, die Gravur der Tiefdruckform mittels des von der Anmelderin hergestellten « Helio-Klischograph » oder Abtastung und Wiederaufzeichnung in rotierenden Scannern oder ähnlichen Maschinen erfolgt.

Bei solchen Maschinen sind auf dem Abtastzylinder eine Vielzahl von Vorlagenmontagen ganzer Magazinseiten montiert, wovon mehrere in einem Abtastgang von einer Abtastoptik linienweise erfaßt werden. Es ist durchaus denkbar, daß dabei gemeinsam abzutastende Vorlagen oder sogar die Einzelbilder innerhalb einer Seite unterschiedlich bezüglich Rasterweite und-/oder Rasterwinkel sind. Auch ungerasterte Seitenmontagen oder Einzelbilder können dabei vorkommen.

Man erkennt leicht, daß das in der genannten deutschen Patentanmeldung beschriebene Verfahren hier versagt, weil eine mechanische Umschaltung von Blendenform und Blendenwinkel zur Anpassung an den jeweils abzutastenden Vorlagenteil viel zu langsam wäre.

Ganz ähnliche Verhältnisse liegen bei Scannern vor. Aus den oben erwähnten Gründen der Wirtschaftlichkeit möchte man auch in der Scanner-Technik Offset-Positive als Vorlagen benutzen. Auch hier können in einem Arbeitsgang Vorlagen mit unterschiedlicher Rasterweite und/oder Rasterwinkelung vorkommen. Zum Beispiel liegt unterschiedliche Rasterwinkelung durchweg immer dann vor, wenn die vier Farbauszüge eines Bildes in einer einzigen Abtastung erfaßt werden sollen (sog. Multicolor-Verfahren) und die Vorlagen als gerasterte Offset-Farbauszüge angeboten werden.

### Aufgabenstellung

Der vorliegenden Erfindung liegt die Aufgabe zugrunde, ein Verfahren und eine Einrichtung anzugeben, die das elektronenoptische Abtasten ungerasterter oder gerasterter Vorlagen mit unterschiedlichen Rasterweiten, Rasterkonfigurationen und/oder Rasterwinkeln, in einem Abtastgang erlauben, ohne daß das im Reproduktionsprozeß zugesetzte Raster in der Aufzeichnung ein Moiré mit einem der Vorlagenraster erzeugt.

Die Erfindung erreicht dies durch die in den Ansprüchen 1 bis 12 genannten Merkmale.

Die Erfindung wird im folgenden anhand der Figuren 1 bis 4 näher beschrieben. Es zeigen :

Figur 1 Schematische Darstellung des Abtastprinzips

Figur 2 Schematische Darstellung der Aufteilung des Lichtleitfaserbündels bzw. der fotoelektrischen Wandler

Figur 3 Blockschaltbild der Blendenauswahl mittels Schreib-Lese-Speicher

Figur 4 Blockschaltbild der Blendenauswahl mittels mehrerer Festwertspeicher

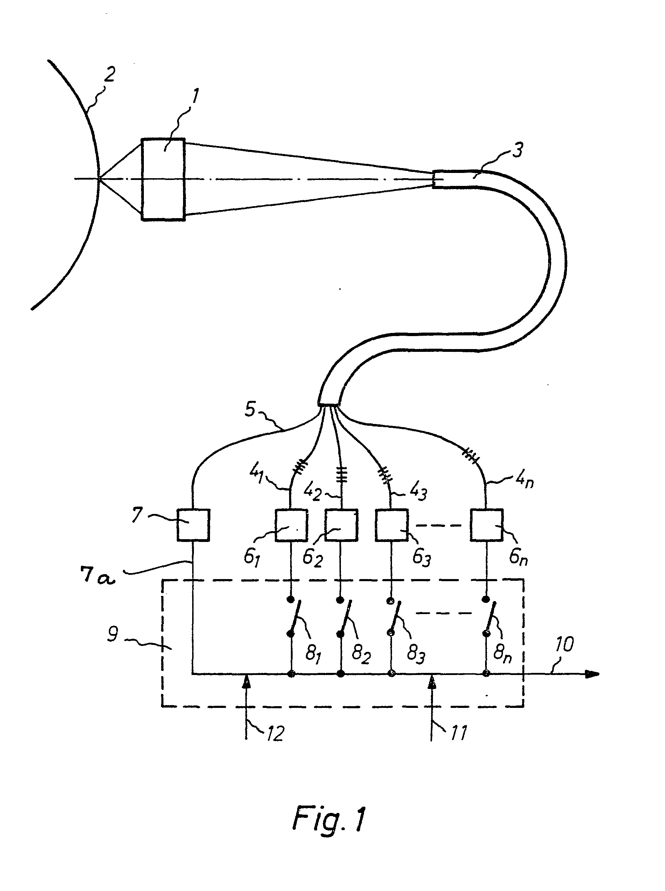

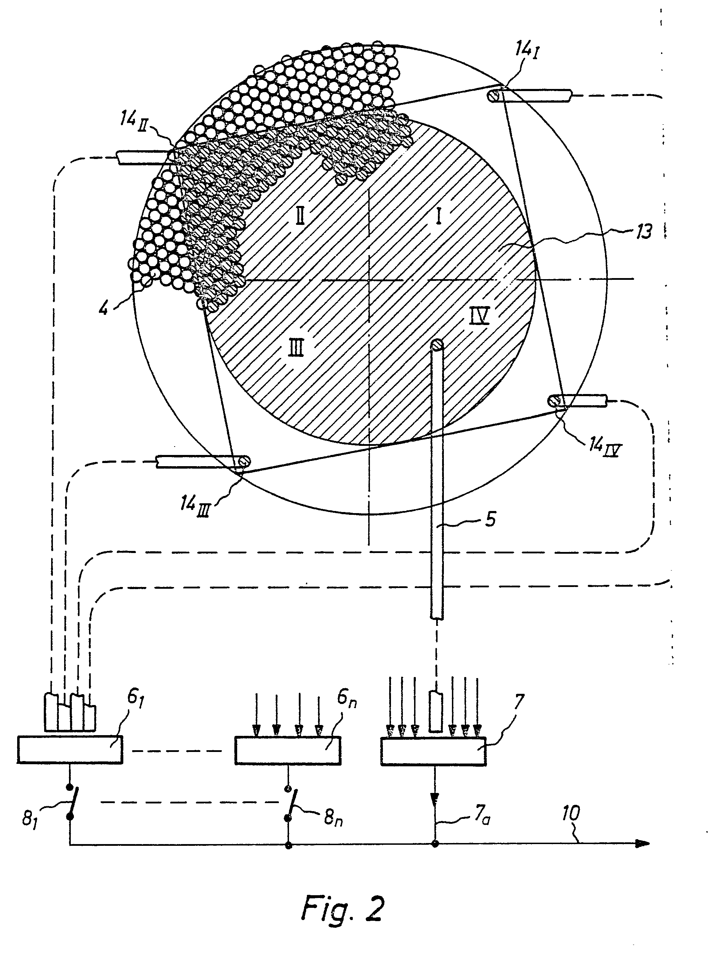

Figur 1 zeigt eine Abtastoptik 1, die ein Teilbild der Vorlage 2 auf der Frontseite eines geordneten Bündels 3 von Lichtleitfasern abbildet. Abbildungsmaßstab, Bündeldurchmesser und Einzelfaserdurchmesser sind dabei aufeinander abgestimmt. Alle Fasern 5 des Bündelkerns 13 (in Figur 2 durch Schraffur angedeutet) führen auf einen Lichtempfänger 7, dessen Ausgangssignal $7a$ einen elektrischen Summenpunkt 10 speist. Die Enden der Randfasern 4 sind auf verschiedene Lichtempfänger $6_1$-$6_n$ verteilt. Die Randfasern 4 sind quadrantenweise in Vierergruppen $4_1$-$4_n$ zusammengefaßt. Jede Viergruppe enthält also eine Faser aus jedem Quadranten I-IV der Frontseite, die innerhalb des jeweiligen Quadranten an korrespondierenden Stellen 14 lokalisiert ist. Durch ein Steuerwerk können die Ausgangssignale durch elektronische Schalter $8_1$-$8_n$ (in Figur 2 als einfache Schalter dargestellt) auf das Bildsignal 10 aufgeschaltet werden.

Dadurch, daß bestimmte Lichtempfänger 6 des Außenbereiches ein- bzw. ausgeschaltet werden, kann die Geometrie der wirksamen Fläche des Eintrittsendes des Faserbündels 3 variiert werden.

Teilt man die Randfasern 4 des Faserbündels 3 in die vier Quadranten I-IV auf und führt die vier korrespondierenden Einzelfasern 14 jedes Quadranten auf einem Lichtempfänger 6 zusammen, so wird die Zahl der erforderlichen Lichtempfänger 6 und Schalter 8 bei gleicher Wirkung auf 1/4 reduziert.

Die Variation der wirksamen Fläche des Faserbündels kommt der Variation der in der genannten deutschen Patentanmeldung beschriebenen Blende bezüglich Form, Größe und Winkelstellung in der Wirkung gleich. Bei der vorliegenden Erfindung kann jedoch die Anpassung durch die elektronischen Schalter 8 im Steuerwerk 9 so schnell vorgenommen werden, daß sie während eines Abtastvorganges von Vorlagenteil zu Vorlagenteil die Blendengeometrie und Winkelung so ändert, wie der nächst abzutastende Vorlagenteil es erfordert. Das Steuerwerk 9, das entscheidet, welche Einzelfasern 4 für den jeweiligen Vorlagenteil aktiviert werden müssen, erhält über die Leitung 12 seine Befehle, die beispielsweise durch Abtastung einer mitlaufenden Steuermaske gewonnen werden. Über Leitung 11 kann außerdem manuell eine gewünschte Geometrie und Winkelstellung durch Setzen der entsprechenden Schalter eingegeben werden.

Für die Abtastung nicht gerasterter Halbtonvorlagen können die Randfasern 4 vorteilhafterweise zu einer Umfeldabtastung zusammengeschaltet werden. Der Bündelkern wirkt als Hauptblende. Damit ist eine elektronische Unscharfmaskierung zur Kontraststeigerung möglich, wie sie in der US-PS 2 691 696 (Youle) beschrieben ist.

Der nicht geschaltete Kernbereich 13 des Faserbündels kann auch aus einer einzigen dicken Einzelfaser bestehen oder durch einen direkt beleuchteten fotoelektrischen Wandler (z. B. Fotodiode) realisiert werden.

Das gesamte Faserbündel läßt sich auch durch ein entsprechend geformtes Array von fotoelektrischen Wandlern (z. B. Dioden) ersetzen. Dieses hat dann auch die in Figur 2 gezeigte Form. Die Abtastoptik 1, für diesen Fall vorteilhafterweise als Zoom-Optik ausgebildet, paßt dann mit ihrem Vergrößerungsmaßstab den abgetasteten Bildteil an die tatsächliche Größe des Arrays an.

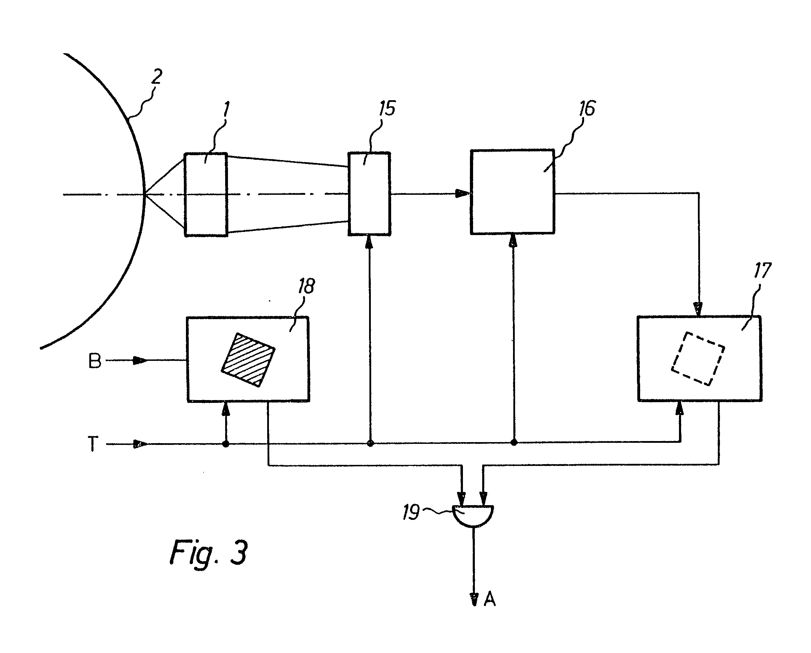

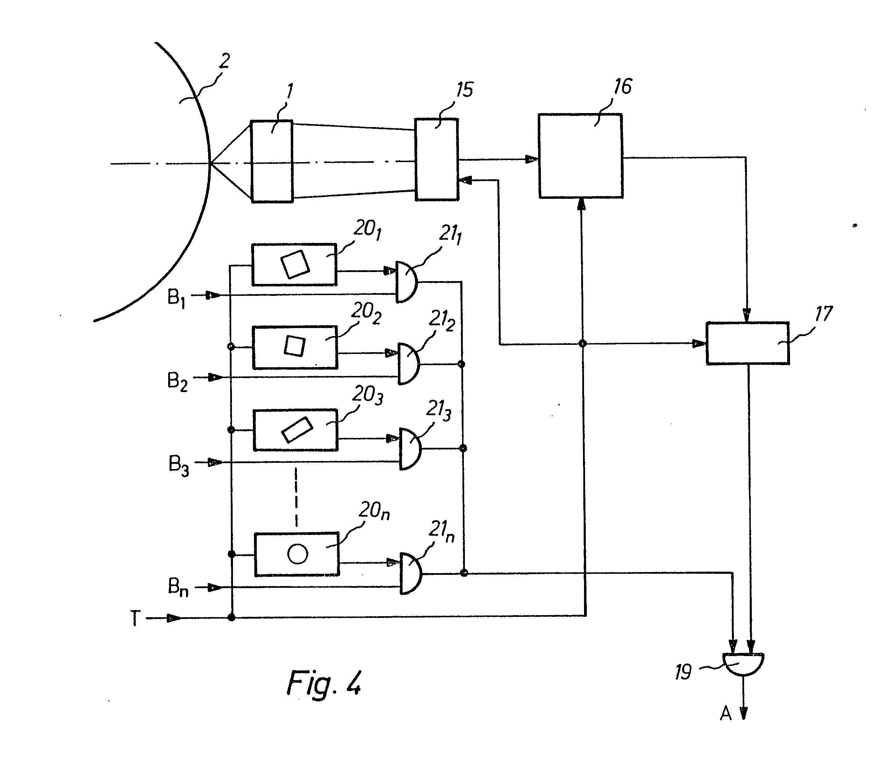

Schließlich kann, wie in Figur 3 und 4 gezeigt, als Lichtempfänger auch eine matrixförmige Anordnung von fotoelektrischen Wandlern mit Speichereigenschaften, z. B. ein sog. Charge-Coupled-Device-Imager-Chip (CCD-Chip) 15 dienen. Das Target solcher Chips ist mit einer Vielzahl von Halbleiterelementen in regulärer Anordnung besetzt, die ein auf das Chip projiziertes Bild als Ladungsträgerbild speichern (beschrieben in « Markt und Technik », Heft 16, April 1982, S. 24 ff.).

Fragt man, wie bei diesen Bauelementen üblich, die Ladungszustände der einzelnen Bildpunkte in einem bestimmten Takt T ab und liest diese Folge von analogen Helligkeitssignalen nach Digitalisierung in einem A/D-Wandler 16 in einen ersten Schreib-Lese-Speicher 17 ein, so kann in diesem das ursprünglich auf das CCD-Chip projizierte Bild als Ladungsträgerbild zwischengespeichert werden. Durch äußere Beschaltung des Schreib-Lese-Speichers 17 kann man bestimmen, welche der Bildpunkte beim Auslesen bewertet werden und welche nicht. Es läßt sich auf diese Weise ein bestimmter Teil des

gespeicherter Bildteils elektronisch « ausblenden » und der « Blende » die jeweils erforderliche Form, Größe und Winkellage geben.

Das kann z. B., wie in Figur 3 gezeigt, durch einen zweiten Schreib-Lese-Speicher 18 geschehen, in dessen Bit-Muster die Blendenform, -größe und -winkellage, d. h. die zu bewertenden Bildpunkte des im Schreib-Lese-Speicher 17 gerade gespeicherten Bildteiles, eingegeben werden. Zur Verdeutlichung ist in Fig. 3 in den Schreib-Lese-Speichern 17 und 18 eine Blendenform schematisch angedeutet. Ein- bzw. Auslesen beider Schreib-Lese-Speicher 17 und 18 sowie des CCD-Chips 15 werden von einem gemeinsamen Takt T gesteuert, wobei dieser Takt vorteilhafterweise von einem nicht gezeigten Taktgeber erzeugt wird, der auf der gleichen Achse montiert ist wie der Vorlagenzylinder des Scanners bzw. der Graviermaschine. Die Codierung des Blenden-Schreib-Lese-Speichers 18, die ja gemäß der Aufgabenstellung während einer Abtastung häufig wechselt, kann von einer mitlaufenden Steuermaske oder auch aus einem mit der Umdrehung synchronisierten Programmspeicher gewonnen und über Leitung B dem Speicher 18 zugeführt werden.

Die Ausgangssignale des Blendenspeichers 18 und des Bildspeichers 17 sind auf ein UND-Gatter 19 geführt, das nur dann ein Ausgangssignal-A abgibt, wenn beide Speicher 17 und 18 ein L-Signal abgeben.

In Abwandlung der in Figur 3 gezeigten Einrichtung können — wie in Figur 4 gezeigt — als Blendenspeicher auch eine Reihe von anderen Datenspeichern $20_1$-$20_n$ mit schnellem Zugriff benutzt werden, in denen verschiedene Blendenformen — wie in Figur 4 angedeutet — gespeichert sind und die über eine Reihe von UND-Gattern $21_1$-$21_n$ den jeweiligen Erfordernissen entsprechend über Steuersignale an den Leitungen $B_1$-$B_n$ aktiviert werden. Die Steuersignale und der Takt T können dabei aus denselben Elementen hergeleitet werden, wie bei der Einrichtung nach Fig. 3.

**Patentansprüche**

1. Verfahren zur elektro-optischen Abtastung und moiréfreien Wiederaufzeichnung von ungerasterten oder gerasterten Vorlagen mit unterschiedlicher Rastergeometrie in einem Abtastgang, wobei dem Abtastsignal vor der Wiederaufzeichnung ein Aufrasterungssignal zugesetzt wird, dadurch gekennzeichnet, daß das von einer Abtastoptik (1) jeweils abgetastete Teilbild auf einer Oberfläche abgebildet wird, die aus einer Vielzahl von Lichtempfängern ($6_1$-$6_n$, 7) besteht, daß aus der Vielzahl von Lichtempängern ($6_1$-$6_n$, 7) nur eine bestimmte Anzahl aktiviert wird, daß durch die Gesamtheit der aktiven Lichtempfänger auf das abgetastete Teilbild bezogen eine Ausblendung vorgenommen wird, deren geometrischer Umriß zu der jeweils abzutastenden Rasterkonfiguration in bestimmter geometrischer Relation steht und daß die Lichtempfänger ($6_1$-

$6_n$) während des Abtastvorganges einzeln oder in Gruppen elektrisch ein- und ausschaltbar sind.

2. Einrichtung zur Durchführung des Verfahrens nach Anspruch 1, dadurch gekennzeichnet, daß die Oberfläche, auf der das Teilbild von der Abtastoptik (1) abgebildet wird, aus einem Bündel (3) vieler einzelnen Lichtleitfasern, vorzugsweise einem geordneten Faserbündel, besteht, daß die Einzelfasern (5) des Bündels (3) auf mehrere fotoelektrische Wandler geführt sind, daß die fotoelektrischen Wandler während des Abtastvorganges in Gruppierungen ein- oder ausschaltbar sind, deren geometrischer Umriß der jeweils abzutastenden Rasterkonfiguration entspricht, und daß die Ausgänge aller Wandler parallel geschaltet sind.

3. Einrichtung nach Anspruch 2, dadurch gekennzeichnet, daß die Fasern des Bündelkerns (13) auf einen gemeinsamen fotoelektrischen Wandler (7) geführt sind und daß dieser fotoelektrische Wandler (7) während des gesamten Abtastvorganges eingeschaltet ist.

4. Einrichtung nach Anspruch 3, dadurch gekennzeichnet, daß der Bündelkern aus einer einzigen im Durchmesser vorzugsweise stärkeren Lichtleitfaser besteht.

5. Einrichtung nach Anspruch 3, dadurch gekennzeichnet, daß statt des Bündelkerns ein fotoelektrischer Wandler in der Bildebene der Abtastoptik angeordnet ist.

6. Einrichtung nach einem der Ansprüche 2-5, dadurch gekennzeichnet, daß die Randfasern (4) des vorzugsweise runden Faserbündels, die nicht zum ungeschalteten Kernbereich (13) gehören, quadrantenweise (I-IV) zusammengefaßt sind, daß korrespondierende Fasern (14 I-14 IV) der einzelnen Quadranten (I-IV) auf jeweils einen gemeinsamen fotoelektrischen Wandler (6) geführt sind und daß deren Ausgänge mit dem Ausgang (7a) des Wandlers (7) für den Bündelkern (13) parallel geschaltet ($8_1$-$8_n$) sind.

7. Einrichtung nach einem der Ansprüche 2-6, dadurch gekennzeichnet, daß das jeweils abgetastete Teilbild auf einer Anzahl von fotoelektrischen Wandlern abgebildet wird, deren geometrische Anordnung der Anordnung der einzelnen Lichtleitfasern auf der Frontfläche des Bündels entspricht.

8. Einrichtung nach Anspruch 7, dadurch gekennzeichnet, daß die geometrische Anordnung der fotoelektrischen Wandler der geometrischen Anordnung der Lichtleitfasern auf der Frontfläche des Bündels geometrisch ähnlich ist und daß der erforderliche Abbildungsmaßstab durch Änderung der Abtastoptik (1) einstellbar ist.

9. Einrichtung nach Anspruch 8, dadurch gekennzeichnet, daß die Abtastoptik (1) als Zoom-Optik ausgebildet ist.

10. Einrichtung zur Durchführung des Verfahrens nach Anspruch 1, dadurch gekennzeichnet, daß die Abtastoptik (1) das jeweils abgetastete Teilbild auf einer matrixförmigen Anordnung von fotoelektrischen Wandlern mit Speichereigenschaften (15), beispielsweise einem CCD-Ship, abbildet, daß deren Ausgangssignale mittels eines A/D-Wandlers (16) digitalisiert werden, daß diese digitalisierten Signale in einem ersten Schreib-Lese-Speicher (17), beispielsweise einem sog. « Rando-Access-Memory (RAM) » gespeichert werden, daß Mittel vorhanden sind, die beim Auslesen des Schreib-Lese-Speichers (17) mittels eines gemeinsamen Lesetaktes nur die Werte aus bestimmten Speicherzellen auslesen, die in ihrer geometrischen Anordnung im gespeicherten Ladungsträgerbild der erforderlichen Blendenform entsprechen.

11. Einrichtung nach Anspruch 10, dadurch gekennzeichnet, daß die Auswahl der auszulesenden Speicherzellen des ersten Schreib-Lese-Speichers (17) durch einen entsprechend codierten zweiten Schreib-Lese-Speicher (18) vorgenommen wird, daß dessen Codierung über eine Steuerleitung (B) während des Abtastvorganges veränderbar ist, daß die Ausgänge beider Schreib-Lese-Speicher (17, 18) mit jeweils einem Eingang eines UND-Gatters (19) verbunden sind und daß von einem Taktgeber ein Schreib-Lese-Takt (T) an den Bildempfänger (15), den A/D-Wandler (16) und die beiden Schreib-Lese-Speicher (17, 18) geführt wird (Fig. 3).

12. Einrichtung nach Anspruch 9, dadurch gekennzeichnet, daß eine Anzahl von Festwertspeichern ($20_1$...$20_n$) mit schnellem Zugriff (beispielsweise programmierbare oder fest programmierte Lesespeicher oder auch Magnetspeicher) vorhanden sind, daß in diesen die Daten für eine Anzahl von Blendenformen gespeichert ist und daß diese über Steuerleitungen ($B_1$...$B_n$) während des Abtastvorganges bei Bedarf einzeln aufgerufen werden (Fig. 4).

## Claims

1. Process for electro-optical scanning and Moire-free rerecording of unscreened or screened originals with differing screen geometry in one scanning operation, a screen generation signal being added to the scanning signal prior to the rerecording action, characterized in that the part image scanned in each case by an optical scanning system (1) is depicted on a surface comprising a plurality of light receptors ($6_1$-$6_n$, 7), that only a certain mumber of the plurality of light receptors ($6_1$-$6_n$, 7) are activated, that the totality of the active light receptors performs a stopping or gating out operation with respect to the part image scanned whose geometrical outline is in a particular geometrical relationship with the screen configuration which is to be scanned in each case, and that the light receptors ($6_1$-$6_n$) may be switched into and out of circuit electrically singly or in groups, during the scanning operation.

2. Apparatus for application of the process according to claim 1, characterized in that the surface on which the part image is depicted by the optical scanning system (1) comprises a bundle (3) of numerous separate optical fibres, preferably being an orderly bundle of fibres, that the separate fibres (5) of the bundle (3) are led to several photoelectric transducers, that the photoelectric transducers may be switched into and out of circuit during the scanning operation in groups whose geometrical contour corresponds to the screen configuration which is to be scanned in each case, and that the outputs of all the transducers are connected in parallel.

3. Apparatus according to claim 2, characterized in that the fibres of the bundle core (17) are led to a common photoelectric transducer (7), and that this photoelectric transducer (7) is switched on during the entire scanning operation.

4. Apparatus according to claim 3, characterized in that the bundle core comprises a single optical fibre of preferably larger diameter.

5. Apparatus according to claim 3, characterized in that a photoelectric transducer is placed in the image plane of the optical scanning system, instead of the bundle core.

6. Apparatus according to one of the claims 2 to 5, characterized in that the marginal fibres (4) of the preferably round fibre bundle which do not appertain to the unswitched core section (13) are combined in quadrant form (I-IV), that corresponding fibres (14 I-14 IV) of the separate quadrants (I-IV) are in each case led to a common photoelectric transducer (6) and that their outputs are connected in parallel with the output (7a) of the transducer (7) for the bundle core (13) ($8_1$-$8_n$).

7. Apparatus according to one of the claims 2 to 6, characterized in that the part image scanned in each case is depicted on a number of photoelectric transducers whose geometrical layout corresponds to the positioning of the individual optical fibres on the front surface of the bundle.

8. Apparatus according to claim 7, characterized in that the geometrical layout of the photoelectric transducers geometrically resembles the geometrical positioning of the optical fibres on the front surface of the bundle and that the required reproduction scale can be set by adjusting the optical scanning system (1).

9. Apparatus according to claim 8, characterized in that the optical scanning system (1) is constructed as a zoom-lens system.

10. Apparatus for application of the method according to claim 1, characterized in that the optical scanning system (1) depicts the part image scanned in each case on a matrix arrangement of photoelectric transducers possessing storage qualities, for example a CCD chip, that their output signals are digitized by means of an analog/digital converter (16), that these digitized signals are stored in a first write-read memory (17), for example being a so-called random access memory (RAM), that means are available which whilst reading the RAM (17) by means of a common reading rate read out only the values present in particular storage cells which in their geometrical layout in the stored charge carrier pattern correspond to the required screen form.

11. Apparatus according to claim 10, characterized in that the selection of the storage cells to be read out of the first RAM (17) is performed by a correspondingly coded second write-read memory (18), that its coding may be varied via a control line (B) during the scanning operation, that the output of both RAMs (17, 18) are in each case connected to an input of an AND gate (19) and that a clock generator feeds a write-read pulse (T) to the image receptor (15), the analog/digital converter (16) and to the two RAMs (17, 18) (Fig. 3).

12. Apparatus according to claim 9, characterized in that a number of memories ($20_1$...$20_n$) for rapid access is available (for example programmable or fixedly programmed ROMs or else magnetic memories), that the data for a number of diaphragm forms are stored in the same and that these are called up individually as needed during the scanning operation via control lines ($B_1$...$B_n$). (Fig. 4).

**Revendications**

1. Procédé pour le balayage électro-optique et le réenregistrement exempts de moirage d'un modèle non tramé ou bien tramé avec une géométrie de trame différente selon un processus de balayage dans lequel un signal de mise en trame est ajouté au signal de balayage avant le réenregistrement, procédé caractérisé en ce que l'image partielle, respectivement balayée par une optique de balayage (1), est reproduite sur une surface constituée d'une pluralité de récepteurs de lumière ($6_1$ à $6_n$, 7), tandis qu'à partir de cette pluralité de récepteurs de lumière ($6_1$ à $6_n$, 7), seul un nombre déterminé de ces récepteurs est activé, et que, par l'intermédiaire de la totalité des récepteurs de lumière actifs, on procède, par rapport à l'image partielle balayée, à une diaphragmation, dont le contour géométrique est dans une relation géométrique déterminée par rapport à la configuration de trame devant être respectivement balayée, les récepteurs de lumière ($6_1$ à $6_n$) étant susceptibles d'être connectés électriquement et déconnectés individuellement ou en groupe pendant le processus de balayage.

2. Dispositif pour la mise en œuvre du procédé selon revendication 1, caractérisé en ce que la surface sur laquelle est reproduite l'image partielle par l'optique de balayage (1), est constituée d'un faisceau (3) d'un grand nombre de fibres individuelles conductrices de la lumière, de préférence d'un faisceau de fibres ordonné, les fibres individuelles (5) de ce faisceau (3) aboutissant à plusieurs convertisseurs photo-électriques, ces convertisseurs photo-électriques étant susceptibles pendant le processus de balayage, d'être connectés ou déconnectés en groupe dont le contour géométrique correspond respectivement à la configuration de trames à balayer, les sorties de tous ces convertisseurs étant branchées en parallèle.

3. Dispositif selon la revendication 2, caractérisé en ce que les fibres du noyau (17) du faisceau aboutissent à un convertisseur photo-électrique commun (7) et que ce convertisseur photo-électrique (7) est connecté pendant la totalité du processus de balayage.

4. Dispositif selon revendication 3, caractérisé en ce que le noyau du faisceau est constitué d'une fibre conductrice de la lumière unique dont le diamètre est de préférence renforcé.

5. Dispositif selon revendication 3, caractérisé en ce que, au lieu d'être disposé au noyau du faisceau, un convertisseur photo-électrique est disposé dans le plan d'image de l'optique de balayage.

6. Dispositif selon une des revendications 2 à 5, caractérisé en ce que les fibres de bordure (4) du faisceau, de fibres, de préférence rond et qui n'appartiennent pas à la zone non connectée du noyau (13), sont rassemblées en cadrans (I à IV), les fibres (14 I à 14 IV) correspondant aux différents cadrans (I à IV) aboutissent respectivement à un convertisseur photo-électrique commun (6), et leurs sorties étant branchées en parallèle sur la sortie (7a) du convertisseur (7) pour le noyau (13) du faisceau.

7. Dispositif selon une des revendications 2 à 6, caractérisé en ce que l'image partielle respectivement balayée est reproduite sur un certain nombre de convertisseurs photo-électriques dont la disposition géométrique correspond à la disposition des différentes fibres conductrices de la lumière sur la surface frontale du faisceau.

8. Dispositif selon revendication 7, caractérisé en ce que la disposition géométrique des convertisseurs photo-électriques est analogue à la disposition géométrique des fibres conductrices de la lumière sur la surface frontale du faisceau, et que l'échelle de reproduction est susceptible d'être réglée par modification de l'optique de balayage (1).

9. Dispositif selon revendication 8, caractérisé en ce que l'optique de balayage (1) est une optique Zoom.

10. Dispositif pour la mise en œuvre du procédé selon la revendication 1, caractérisé en ce que l'optique de balayage (1) reproduit l'image partielle respectivement balayée sur une disposition en forme de matrice de convertisseurs photo-électriques avec des propriétés de mémorisation (15), par exemple un CCD-Ship, les signaux de sortie de ces convertisseurs étant mis sous forme numérique au moyen d'un convertisseur analogique numérique (16), ces signaux ainsi mis sous forme numérique étant mémorisés dans une première mémoire à écriture-lecture (17) par exemple une mémoire dite « Random-Access-Memory (RAM) », des moyens étant prévus qui, lors de la lecture de la mémoire à écriture-lecture (17), grâce à une synchronisation de lecture commune, lisent uniquement les valeurs en provenance de cellules de mémoires déterminées qui, dans leur disposition géométrique sur l'image de porteurs de charges mémorisée, correspondent à la forme de diaphragme prévue.

11. Dispositif selon revendication 10, caractérisé en ce que le choix des cellules de mémoire devant être lues dans la première mémoire à écriture-lecture (17) s'opère par l'intermédiaire d'une seconde mémoire à écriture-lecture (18) codée de façon appropriée cette codification étant susceptible d'être modifiée pendant le processus de balayage par l'intermédiaire d'un conducteur de commande (B), les sorties des deux mémoires à écriture-lecture (17, 18) étant respectivement reliées à une entrée d'une porte ET (19) et des impulsions de synchronisation d'écriture et de lecture (T) étant transmises au récepteur d'image (15), au convertisseur analogique/numérique (16) et aux deux mémoires à lecture-écriture (17, 18) à partir d'un émetteur d'impulsions.

12. Dispositif selon revendication 9, caractérisé en ce qu'il est prévu un certain nombre de mémoires de valeurs fixes ($20_1$ à $20_n$) à accès rapide (par exemple des mémoires à lecture seule, programmables ou programmées de façon fixe, ou encore des mémoires magnétiques), les données correspondant à un certain nombre de formes de diaphragmes étant stokées dans ces mémoires et étant appelées individuellement en cas de besoin, pendant le processus de balayage, par l'intermédiaire de conducteurs de commande ($B_1$ à $B_n$).

*Fig.1*

*Fig. 2*

*Fig. 3*

Fig. 4